# EUROPEAN PATENT SPECIFICATION

(11) **EP 1 226 695 B1**
(45) Date of publication and mention of the grant of the patent: **11.01.2006**
(21) Application number: 00976097.6
(22) Date of filing: 06.11.2000
(51) Int. Cl.: H04L 29/06, H04M 3/50

(54) **TRANSMISSION OF MULTIMEDIA MESSAGES BETWEEN MOBILE STATION TERMINALS**
ÜBERTRAGUNG VON MULTIMEDIA-NACHRICHTEN ZWISCHEN MOBILEN ENDGERÄTEN
TRANSMISSION DE MESSAGES MULTIMEDIA ENTRE DES TERMINAUX DE STATIONS MOBILES

(30) Priority: 05.11.1999 FI 992399
(43) Date of publication of application: 31.07.2002
(73) Proprietor: TeliaSonera Finland Oyj, 00510 Helsinki (FI)
(72) Inventor: ALA-LUUKKO, Sami, FIN-00280 Helsinki (FI); KOSKI, Jussi, FIN-00500 Helsinki (FI)
(74) Representative: Simmelvuo, Markku Kalevi
(86) International application number: PCT/FI2000/000969
(87) International publication number: WO 2001/033803

(56) References cited:
- EP-A2- 0 817 443
- WO-A-98/19438
- WO-A1-97/08906
- US-A- 5 742 905

## Description

The invention relates to telecommunication. In particular, the invention relates to a new and advanced method of transmitting messages containing multimedia information between mobile station terminals.

### PRIOR ART

The use of short messages in communication between mobile stations has become common for the past few years. The maximum length for a short message is up to 160 characters. The transmission of messages does not require that the mobile station is switched on. If the mobile station cannot be reached, the message is saved to the short message service centre. The short message service centre saves the message for several days, and if the mobile station receiving the message is activated in the area of the mobile network, then the message is sent to the mobile station. Messages are being transmitted either in the area of the same cell or to other cells by means of the roaming feature of the mobile station. Typically, short messages are being transmitted in a pan-European digital mobile network (GSM, Global System for Mobile Communications).

As known, short messages may only be used for sending messages in a text form. The quick development of technology has lead to the fact that in the near future, the consumers will be offered also a possibility to the use of multimedia messages consisting of different media components. Multimedia messages have not, however, been standardized in any way, so it is apparent that the solutions to be offered are operator-/device manufacturer-specific. The consequence of this is the problem that multimedia messages cannot be sent between different operators, or the transmission is going to be a difficult and expensive process.

### OBJECTIVE OF THE INVENTION

The objective of the present invention is to disclose a new kind of method and system that eliminate the drawbacks referred to above or at least significantly alleviate them. One specific objective of the invention is to present a method and a system that enable the transmission of messages containing multimedia information between different operators.

### SUMMARY OF THE INVENTION

In the present invention, a multimedia message is transmitted in a telecommunication network. The created multimedia message is sent from the first mobile station terminal, is transmitted further on, a notification informing about the multimedia message that came in is sent to the receiving second mobile station terminal, and the multimedia message is retrieved on the second mobile station terminal device. A multimedia message is used to mean a message, which advantageously consists of several different media components, such as an image, voice, text and/or graphics.

According to the invention, a multimedia message is sent from the first mobile station terminal to the first multimedia message server using the mobile communication network, the multimedia message is saved on the first multimedia message server to the mailbox of the sender; if necessary, the address information of the second multimedia message server is found out using the first address database arranged in conjunction with the first multimedia message server, an e-mail message is created based on the multimedia message, the e-mail message is transmitted from the first multimedia message server to the second multimedia message server using the IP network, a multimedia message is created based on the received e-mail message using the second multimedia message server, the multimedia message is saved on the second multimedia message server to the mailbox of the receiver; if necessary, the address of the second terminal device is found out by means of the second address database arranged in conjunction with the second multimedia message centre, and a notification informing about the multimedia message that came in is sent from the second multimedia message server to the second terminal device using the mobile communication network. If necessary, the message may also be created a mailbox of its own. Multimedia message servers may be implemented as separate units, or they may be integrated with the already existing network components, e.g. with the short message server. A digital mobile network is, e.g. a GSM network. The IP network is used to mean a telecommunication network that uses the IP protocol (Internet Protocol, IP) for data transfer. This kind of network is, e.g. the public Internet network.

In an embodiment of the invention, an e-mail message is created based on the multimedia message by coding the multimedia message in question into an e-mail message in the MIME form, e.g. in such a way that the text part to be sent is attached to serve as the plain message body and the other parts of the message are attached to the attachment part of the message. MIME (Multipurpose Internet Mail Extensions, MIME) is a way of combining attachments to e-mail messages known in itself.

In an embodiment of the invention, information is maintained in the first address database that relates to the correlation between the DNS addresses (Domain Name Server, DNS) and MSISDN numbers (Mobile Subscriber ISDN, MSISDN) of multimedia message servers.

In an embodiment of the invention, information is maintained in the second address database that relates to the correlation between the MSISDN numbers and e-mail addresses belonging to the sphere of the second multimedia message server.

In an embodiment of the invention, a multimedia message is sent from the first mobile station terminal using a browser-type user interface in the terminal device in question. Advantageously, this kind of browser-type user interface has been implemented using the WAP technology (Wireless Access Protocol, WAP)

In an embodiment of the invention, the multimedia message is retrieved on the second mobile station terminal using a browser-type user interface in the terminal device in question. Advantageously, this kind of browser-type user interface has been implemented using the WAP technology.

In an embodiment of the invention, the e-mail to be transmitted is encrypted. For the encryption, an encryption method PGP (Pretty Good Privacy, PGP) known in itself may be used.

In an embodiment of the invention, the e-mail message is transmitted using the SMTP protocol (Simple Message Transfer Protocol, SMTP).

In an embodiment of the invention, a billing ticket is generated based on the multimedia message.

There is also provided a system according to Claim 10.

As compared with prior art, the present invention provides the advantage that it makes it possible to send multimedia messages between different operators. Since the invention utilizes existing generally known e-mail practices, the solution in accordance with the invention is easy to implement and widen. Further, the solution in accordance with the invention does not require the building of dedicated connections between the multimedia message servers because one may use the public Internet. Due to the possibility of encryption, the information security is not endangered either.

### BRIEF DESCRIPTION OF THE DRAWINGS

In the following section, the invention will be described by the aid of attached examples of embodiments with reference to the accompanying drawing, in which
Fig. 1 schematically represents one system in accordance with the invention; and
Fig. 2 schematically represents one method in accordance with the invention.

### DEATAILED DESCRIPTION OF THE INVENTION

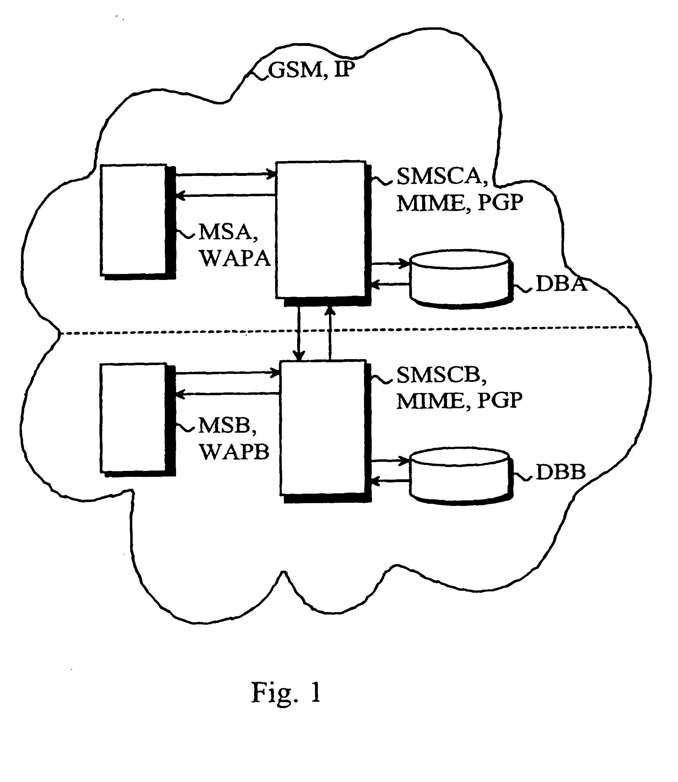

Fig. 1 is a block diagram representing, by way of example, the components of one system in accordance with the invention. As shown by Fig 1, the system comprises a mobile station terminal MSA for sending the multimedia message, a second mobile station terminal MSB for receiving the multimedia message, and a digital mobile network GSM. According to the invention, the system comprises a first multimedia message server SMSCA for saving the multimedia message, transforming it into an e-mail message and for sending the e-mail message in question to the second multimedia message server SMSCB, a first address database DBA for maintaining the address information of the multimedia message servers, which first address database DBA is arranged in conjunction with the first multimedia message server SMSCA, an IP network IP for transmitting the e-mail message in question from the first multimedia message server SMSCA to the second multimedia message server SMSCB; a second multimedia message server SMSCB for transforming the received e-mail message into a multimedia message, for saving the multimedia message and for sending a notification of the multimedia message that came in to the second terminal device MSB, and a second address database DBB for maintaining the address information of mobile subscribers belonging to the sphere of the second multimedia message server SMSCB, which second address database DBB has been arranged in conjunction with the second multimedia message server SMSCB. In addition, the system comprises a coder MIME for coding the multimedia message into an e-mail message in the MIME form as well as an encrypting method PGP for encrypting the e-mail message to be transmitted. The first terminal device MSA comprises a browser-type user interface WAPA. In addition, the second terminal device MSB comprises a browser-type user interface WAPB.

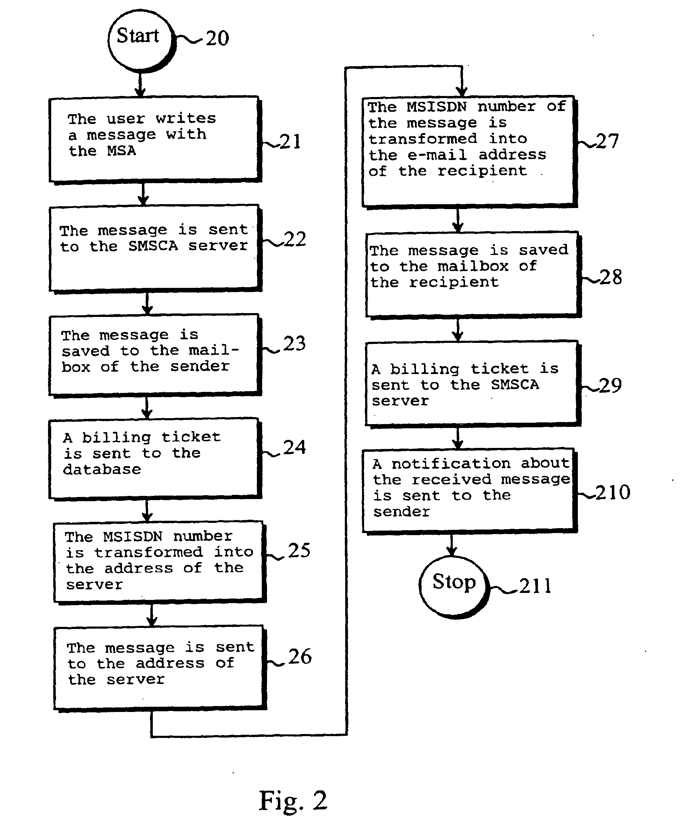

Fig. 2 is a flow chart representing, by way of example, one method in accordance with the invention, by means of which method a short message is sent between two different operators via the IP network. At first, the user of the mobile station writes a short message, block 21. The short message is sent to the short message service centre, block 22. In the short message service centre, the short message is temporarily saved to the mailbox of the sender, block 23. A billing ticket is sent to the database, block 24. The address of the message is, e.g. of the form +358400123456@mmm.operator.com. Based on the country code of the message and the operator code, +358400, the e-mail server of the recipient becomes clear, block 25. For finding out the country code, operator code and the address of the e-mail server, a specific database is maintained in the short message service centre. The message is transmitted via the IP network to the server of the recipient, block 26. For the period of the data transfer, the multimedia information is coded by a multipurpose Internet mail extension (MIME, Multipurpose Internet Mail Extension), and for the transfer itself, a simple message transfer protocol (STMP, Simple Message Transfer Protocol) is used. The address of the message is being further examined on the receiving server. The receiving server is equipped with a database using which the address of the message +358400123456@mmm.operator.com may be transformed into the form of an e-mail message of the recipient First name.Family name@mmm.operator.com, block 27. After this, the message is saved to the electronic mail box of the recipient, block 28. If there is no electronic mail box, a new electronic mail box is created. A billing ticket is created based on the message that is sent to the server that sent the message, and after this the receiver of the message is sent the whole message or a part of the message, blocks 29 and 210. The transmission type of the message is selected based on the features of the terminal device of the recipient and the network.

The invention is not restricted merely to the embodiments referred to above, instead many variations are possible within the scope defined by the claims.

## Claims

1. A method for transmitting multimedia messages in a telecommunication network comprising the steps of:
sending (22) the multimedia message from a first mobile station terminal,
transmitting the multimedia message,
sending (210) a notification of the multimedia message that came in to a second mobile station terminal,
retrieving the multimedia message on the second mobile station terminal,
**characterised in that** the method further comprises the steps of:
sending the multimedia message from the first mobile station terminal to a first multimedia message server via the digital mobile network,
saving (23) the multimedia message on the first multimedia message server to a mailbox of the sender,
finding out the address information of a second multimedia message server, if necessary, by utilizing a first database arranged in conjunction with the first multimedia message server,
creating an e-mail message based on the multimedia message,
transmitting the e-mail message from the first multimedia message server to the second multimedia message server,
creating a multimedia message based on the e-mail message received on the second multimedia message server,
saving (28) the multimedia message on the second multimedia message server to the mailbox of the recipient,
finding out the address information of the second terminal device, if necessary, by utilizing a second database arranged in conjunction with the second multimedia message centre, and
sending a notification of the multimedia message that came in from the second multimedia message server to the second terminal device via the mobile communication network.

2. A method as defined in claim 1, **characterised in that** the method further comprises the step of:
creating an e-mail message based on the multimedia message by coding the multimedia message in question into an e-mail message in the MIME form.

3. A method as defined in claim 1 or 2, **characterised in that** the method further comprises the step of:
maintaining in the first address database information relating to the correlation between the DNS addresses and MSISDN numbers of the multimedia message servers.

4. A method as defined in claim 1, 2 or 3, **characterised in that** the method further comprises the step of:
maintaining in the second address database information relating to the correlation between the MSISDN numbers and e-mail addresses of the mobile subscribers belonging to the sphere of the second multimedia message server.

5. A method as defined in claim 1, 2, 3 or 4, **characterised in that** the method further comprises the step of:
sending the multimedia message from the first mobile station terminal using a browser-type user interface in the terminal device in question.

6. A method as defined in claim 1, 2, 3, 4 or 5, **characterised in that** the method further comprises the step of:
retrieving the multimedia message on the second mobile station terminal using a browser-type user interface in the terminal device in question.

7. A method as defined in claim 1, 2, 3, 4, 5 or 6, **characterised in that** the method further comprises the step of:
encrypting the e-mail message to be transmitted

8. A method as defined in claim 1, 2, 3, 4, 5, 6 or 7, **characterised in that** the method further comprises the step of:
transmitting the e-mail message using the SMTP protocol.

9. A method as defined in claim 1, 2, 3, 4, 5, 6, 7 or 8, **characterised in that** the method further comprises the step of:
generating a billing ticket based on the multimedia message.

10. A system for transmitting a multimedia message in a telecommunication network comprising:
a first mobile station terminal (MSA) for sending the multimedia message,
a second mobile station terminal (MSB) for receiving the multimedia message, and
a digital mobile network (GSM),
**characterised in that** the system further comprises:
a first multimedia message server (SMSCA) for saving the multimedia message to be transmitted, transforming it into an e-mail message as well as for sending the e-mail message in question to a second multimedia message server (SMSCB),
a first address database (DBA) for maintaining the address information of the multimedia message servers, which first address database (DBA) has been arranged in conjunction with the first multimedia message server (SMSCA),
an IP network (IP) for transmitting the e-mail message in question from the first multimedia message server (SMSCA) to the second multimedia message server (SMSCB),
a second multimedia message server (SMSCB) for transforming the received e-mail message into a multimedia message, for saving the multimedia message and for sending a notification of the multimedia message that came in to the second terminal device (MSB), and
a second address database (DBB) for maintaining the address information of mobile subscribers belonging to the sphere of the second multimedia message server (SMSCB), which second address database (DBB) has been arranged in conjunction with the second multimedia message server (SMSCB).

11. A system as defined in claim 10, **characterised in that** the system further comprises:
a coder (MIME) for coding the multimedia message into an e-mail message in the MIME form.

12. A system as defined in claim 10 or 11, **characterised in that** the first address database (DBA) is arranged for maintaining the correlation information of the DNS addresses and MSISDN numbers of the multimedia message servers.

13. A system as defined in claim 10, 11 or 12, **characterised in that** the second address database (DBB) is arranged for maintaining the correlation information between the MSISDN numbers and e-mail addresses of the mobile subscribers belonging to the sphere of the second multimedia message server.

14. A system as defined in claim 10, 11, 12 or 13, **characterised in that** the first terminal device (MSA) further comprises:
a browser-type user interface (WAPA).

15. A system as defined in claim 10, 11, 12, 13 or 14, **characterised in that** the second terminal device (MSB) further comprises:
a browser-type user interface (WAPB).

16. A system as defined in claim 10, 11, 12, 13, 14 or 15, **characterised in that** the system further comprises:
encryption means (PGB) for encrypting the e-mail message to be transmitted.

## Patentansprüche

1. Verfahren zum Übertragen von Multimedia-Nachrichten in einem Telekommunikationsnetzwerk, welches folgende Verfahrensschritte aufweist:
- Senden (22) der Multimedia-Nachricht von einem ersten mobilen Endgerät,
- Übertragen der Multimedia-Nachricht;
- Senden (210) einer Mitteilung der angekommenen Multimedia-Nachricht an ein zweites mobiles Endgerät;
- Abrufen der Multimedia-Nachricht auf dem zweiten mobilen Endgerät,
**dadurch gekennzeichnet, dass** das Verfahren weiterhin die folgenden Verfahrensschritte aufweist:
- Senden der Multimedia-Nachricht von dem einem ersten mobilen Endgerät zu einem ersten Multimedia-Nachrichten-Server über das digitale Netzwerk;
- Speichern (23) der Multimedia-Nachricht auf dem ersten Multimedia-Nachrichten-Server in einer Mailbox des Senders;
- Ermitteln der Adresseninformation eines zweiten Multimedia-Nachrichten-Servers, falls notwendig, durch Verwenden einer ersten Datenbank, die im Zusammenhang mit dem ersten Multimedia-Nachrichten-Server angeordnet ist;
- Erzeugen einer E-Mail-Nachricht, die auf der Multimedia-Nachricht basiert;
- Übertragen der E-Mail-Nachricht von dem ersten Multimedia-Nachrichten-Server zu dem zweiten Multimedia-Nachrichten-Server;
- Erzeugen einer Multimedia-Nachricht, die auf der E-Mail-Nachricht basiert, welche auf dem zweiten Multimedia-Nachrichten-Server empfangen wurde;
- Speichern (28) der Multimedia-Nachricht auf dem zweiten Multimedia-Nachrichten-Server in der Mailbox des Empfängers;
- Ermitteln der Adresseninformationen des zweiten Endgeräts, falls notwendig, durch Verwenden einer zweiten Datenbank, die im Zusammenhang mit dem zweiten Multimedia-Nachrichten-Zentrums angeordnet ist; und
- Senden einer Mitteilung der angekommenen Multimedia-Nachricht von dem zweiten Multimedia-Nachrichten-Server an das zweite Endgerät über das mobile Kommunikationsnetzwerk.

2. Verfahren nach Anspruch 1, **dadurch gekennzeichnet, dass** das Verfahren weiterhin den folgenden Verfahrensschritt aufweist:
- Erzeugen einer E-Mail-Nachricht, die auf der Multimedia-Nachricht basiert, durch Kodieren der betreffenden Multimedia-Nachricht in eine E-Mail-Nachricht in dem MIME-Format.

3. Verfahren nach Anspruch 1 oder 2, **dadurch gekennzeichnet, dass** das Verfahren weiterhin den folgenden Verfahrensschritt aufweist:
- Beibehalten von Informationen in der ersten Adressendatenbank, welche die Korrelation zwischen den DNS-Adressen und MSISDN-Nummern der Multimedia-Nachrichten-Server betreffen.

4. Verfahren nach Anspruch 1, 2 oder 3, **dadurch gekennzeichnet, dass** das Verfahren weiterhin den folgenden Verfahrensschritt aufweist:
- Beibehalten von Informationen in der zweiten Adressendatenbank, welche die Korrelation zwischen den MSISDN-Nummern und E-Mail-Adressen der mobilen Teilnehmer betreffen, die zu dem Wirkungsgebiet des zweiten Multimedia-Nachrichten-Servers gehören.

5. Verfahren nach Anspruch 1, 2, 3 oder 4, **dadurch gekennzeichnet, dass** das Verfahren weiterhin den folgenden Verfahrensschritt aufweist:
- Senden der Multimedia-Nachricht von dem ersten mobilen Endgerät durch Verwenden eines Benutzerinterface in Browserausführung in dem betreffenden Endgerät.

6. Verfahren nach Anspruch 1, 2, 3, 4 oder 5, **dadurch gekennzeichnet, dass** das Verfahren weiterhin den folgenden Verfahrensschritt aufweist:
- Abrufen der Multimedia-Nachricht auf dem mobilen Endgerät durch Verwenden eines Benutzerinterface in Browserausführung in dem betreffenden Endgerät.

7. Verfahren nach Anspruch 1, 2, 3, 4, 5 oder 6, **dadurch gekennzeichnet, dass** das Verfahren weiterhin den folgenden Verfahrensschritt aufweist:
- Verschlüsseln der zu versendenden E-Mail-Nachricht.

8. Verfahren nach Anspruch 1, 2, 3, 4, 5, 6 oder 7, **dadurch gekennzeichnet, dass** das Verfahren weiterhin den folgenden Verfahrensschritt aufweist:
- Übertragen der E-Mail-Nachricht durch Verwenden des SMTP-Protokolls.

9. Verfahren nach Anspruch 1, 2, 3, 4, 5, 6, 7 oder 8, **dadurch gekennzeichnet, dass** das Verfahren weiterhin den folgenden Verfahrensschritt aufweist:
- Erzeugen eines Rechnungsscheins basierend auf der Multimedia-Nachricht.

10. System zur Übertragung einer Multimedia-Nachricht in einem Telekommunikationsnetzwerk mit:
- einem ersten mobilen Endgerät (MSA) zur Versendung der Multimedia-Nachricht;
- einem zweiten mobilen Endgerät (MSB) zum Empfang der Multimedia-Nachricht; und
- einem digitalen mobilen Netzwerk (GSM),
**dadurch gekennzeichnet, dass** das System weiterhin Folgendes aufweist:
- einen ersten Multimedia-Nachrichten-Server (SMSCA) zur Speicherung der zu übertragenden Multimedia-Nachricht, zu ihrer Umwandlung in eine E-Mail-Nachricht sowie auch zur Versendung der betreffenden E-Mail-Nachricht zu einem zweiten Multimedia-Nachrichten-Server (SMSCB);
- eine erste Adressendatenbank (DBA) zur Beibehaltung der Adresseninformation der Multimedia-Nachrichten-Server, wobei die erste Adressendatenbank (DBA) im Zusammenhang mit dem ersten Multimedia-Nachrichten-Server (SMSCA) angeordnet ist;
- ein IP-Netzwerk (IP) zur Übertragung der betreffenden E-Mail-Nachricht von dem ersten Multimedia-Nachrichten-Server (SMSCA) zu dem zweiten Multimedia-Nachrichten-Server (SMSCB);
- einen zweiten Multimedia-Nachrichten-Server (SMSCB) zur Umwandlung der empfangenen E-Mail-Nachricht in eine Multimedia-Nachricht, zur Speicherung der Multimedia-Nachricht und zur Versendung einer Mitteilung der angekommenen Multimedia-Nachricht zu dem zweiten Endgerät (MSB); und
- eine zweite Adressendatenbank (DBB) zur Beibehaltung der Adresseninformation von mobilen Teilnehmern, die zu dem Wirkungsgebiet des zweiten Multimedia-Nachrichten-Servers (SMSCB) gehören , wobei die zweite Adressendatenbank (DBB) im Zusammenhang mit dem zweiten Multimedia-Nachrichten-Server (SMSCB) angeordnet ist.

11. System nach Anspruch 10, **dadurch gekennzeichnet, dass** das System weiterhin einen Kodierer (MIME) zur Kodierung der Multimedia-Nachricht in eine E-Mail-Nachricht in dem MIME-Format aufweist.

12. System nach Anspruch 10 oder 11, **dadurch gekennzeichnet, dass** die erste Adressendatenbank (DBA) zur Beibehaltung der Korrelationsinformationen der DNS-Adressen und MSISDN-Nummern der Multimedia-Nachrichten-Server angeordnet ist.

13. System nach Anspruch 10, 11 oder 12, **dadurch gekennzeichnet, dass** die zweite Adressendatenbank (DBB) zur Beibehaltung der Korrelationsinformationen zwischen den MSISDN-Nummern und E-Mail-Adressen der mobilen Teilnehmer in dem Wirkungsbereich des zweien Multimedia-Nachrichten-Servers angeordnet ist.

14. System nach Anspruch 10, 11, 12 oder 13, **dadurch gekennzeichnet, dass** das erste Endgerät (MSA) weiterhin ein Benutzerinterface (WAPA) in Browserausführung aufweist.

15. System nach Anspruch 10, 11, 12, 13 oder 14, **dadurch gekennzeichnet, dass** das zweite Endgerät (MSB) weiterhin ein Benutzerinterface (WAPB) in Browserausführung aufweist.

16. System nach Anspruch 10, 11, 12, 13, 14 oder 15, **dadurch gekennzeichnet, dass** das System weiterhin Verschlüsselungseinrichtungen (PGB) zur Verschlüsselung der zu übertragenden E-Mail-Nachricht aufweist.

## Revendications

1. Procédé de transmission de messages multimédia dans un réseau de télécommunications comprenant les étapes consistant à :
envoyer (22) le message multimédia à partir d'un premier terminal de station mobile ;
transmettre le message multimédia ;
envoyer (21a) une notification du message multimédia qui est parvenu jusqu'à un deuxième terminal de station mobile ;
récupérer le message multimédia sur le deuxième terminal de station mobile ;
**caractérisé en ce que** le procédé comprend en outre les étapes consistant à:
envoyer le message multimédia depuis le premier terminal de station mobile vers un premier serveur de messages multimédia par le biais du réseau de télécommunications mobiles numérique ;
sauvegarder (23) le message multimédia sur le premier serveur de messages multimédia dans une boîte aux lettres de l'expéditeur ;
trouver les données d'adresse d'un deuxième serveur de messages multimédia, si nécessaire, en utilisant une première base de données agencée en relation avec le premier serveur de messages multimédia ;
créer un message de courrier électronique sur la base du message multimédia ;
transmettre le message de courrier électronique depuis le premier serveur de messages multimédia vers le deuxième serveur de messages multimédia ;
créer un message multimédia sur la base du message de courrier électronique reçu sur le deuxième serveur de messages multimédia ;
sauvegarder (28) le message multimédia sur le deuxième serveur de messages multimédia dans la boîte aux lettres du destinataire ;
trouver les données d'adresse du deuxième serveur de messages multimédia, si nécessaire, en utilisant une deuxième base de données agencée en relation avec le deuxième serveur de messages multimédia ; et
envoyer une notification du message multimédia qui est arrivé depuis le deuxième serveur de messages multimédia jusqu'au deuxième dispositif formant terminal par le biais du réseau de télécommunications mobiles.

2. Procédé selon la revendication 1, **caractérisé en ce que** le procédé comprend en outre l'étape consistant à :
créer un message de courrier électronique sur la base du message multimédia en codant le message multimédia en question à l'intérieur d'un message de courrier électronique au format MIME.

3. Procédé selon la revendication 1 ou 2, **caractérisé en ce que** le procédé comprend en outre l'étape consistant à :
conserver, dans la première base de données d'adresses, des informations relatives à la corrélation entre les adresses DNS et des numéros MSISDN des serveurs de messages multimédia.

4. Procédé selon la revendication 1, 2 ou 3, **caractérisé en ce que** le procédé comprend en outre l'étape consistant à :
conserver, dans la deuxième base de données d'adresses, des informations relatives à la corrélation entre les numéros MSISDN et des adresses de courrier électronique des abonnés mobiles appartenant à la sphère du deuxième serveur de messages multimédia.

5. Procédé selon la revendication 1, 2, 3 ou 4, **caractérisé en ce que** le procédé comprend en outre l'étape consistant à :
envoyer le message multimédia depuis le premier terminal de station mobile en utilisant une interface utilisateur de type navigateur dans le dispositif formant terminal en question.

6. Procédé selon la revendication 1, 2, 3, 4 ou 5, **caractérisé en ce que** le procédé comprend en outre l'étape consistant à :
récupérer le message multimédia sur le deuxième terminal de station mobile en utilisant une interface utilisateur de type navigateur dans le dispositif formant terminal en question.

7. Procédé selon la revendication 1, 2, 3, 4, 5 ou 6, **caractérisé en ce que** le procédé comprend en outre l'étape consistant à :
chiffrer le message de courrier électronique qui doit être transmis.

8. Procédé selon la revendication 1, 2, 3, 4, 5, 6 ou 7, **caractérisé en ce que** le procédé comprend en outre l'étape consistant à :
transmettre le message de courrier électronique en utilisant le protocole SMTP.

9. Procédé selon la revendication 1, 2, 3, 4, 5, 6, 7 ou 8, **caractérisé en ce que** le procédé comprend en outre l'étape consistant à :
créer un bordereau de facturation sur la base du message multimédia.

10. Système de transmission d'un message multimédia dans un réseau de télécommunications, comprenant :
un premier terminal de station mobile (MSA) destiné à envoyer le message multimédia ;
un deuxième terminal de station mobile (MSB) destiné à recevoir le message multimédia ; et
un réseau de télécommunications mobiles numérique (GSM), **caractérisé en ce que** le système comprend en outre :
un premier serveur de messages multimédia (SMSCA) destiné à sauvegarder le message multimédia qui doit être transmis, à le transformer en un message de courrier électronique, et à envoyer le message de courrier électronique en question vers un deuxième serveur de messages multimédia (SMSCB) ;
une première base de données d'adresses (DBA) destinée à conserver les données d'adresses des serveurs de messages multimédia, cette première base de données d'adresses (DBA) étant agencée en conjonction avec le premier serveur de messages multimédia (SMSCA) ;
un réseau IP (IP) destiné à transmettre le message de courrier électronique en question depuis le premier serveur de messages multimédia (SMSCA) vers le deuxième serveur de messages multimédia (SMSCB) ;
un deuxième serveur de messages multimédia (SMSCB) destiné à transformer le message de courrier électronique reçu en un message multimédia, à sauvegarder le message multimédia et à envoyer une notification du message multimédia qui est parvenu jusqu'au deuxième dispositif formant terminal (MSB) ; et
une deuxième base de données d'adresses (DBB) destinée à conserver les données d'adresses d'abonnés mobiles appartenant à la sphère du deuxième serveur de messages multimédia (SMSCB), cette deuxième base de données d'adresses (DBB) étant agencée en conjonction avec le deuxième serveur de messages multimédia (SMSCB).

11. Système selon la revendication 10, **caractérisé en ce que** le système comprend en outre :
un encodeur (MIME) destiné à coder le message multimédia en un message de courrier électronique au format MIME.

12. Système selon la revendication 10 ou 11, **caractérisé en ce que** la première base de données d'adresses (DBA) est agencée de façon à conserver les données de corrélation des adresses DNS et des numéros MSISDN des serveurs de messages multimédia.

13. Système selon la revendication 10, 11 ou 12, **caractérisé en ce que** la deuxième base de données d'adresses (DBB) est agencée de façon à conserver les données de corrélation entre les numéros MSISDN et les adresses de courrier électronique des abonnés mobiles appartenant à la sphère du deuxième serveur de messages multimédia.

14. Système selon la revendication 10, 11, 12 ou 13, **caractérisé en ce que** le premier dispositif formant terminal (MSA) comprend en outre :
une interface utilisateur de type navigateur (WAPA).

15. Système selon la revendication 10, 11, 12, 13 ou 14, **caractérisé en ce que** le deuxième dispositif formant terminal (MSB) comprend en outre :
une interface utilisateur de type navigateur (WAPB).

16. Système selon la revendication 10, 11, 12, 13, 14 ou 15, **caractérisé en ce que** le système comprend en outre :
des moyens de chiffrement (PGB) destinés à chiffrer le message de courrier électronique qui doit être transmis.
